# EUROPEAN PATENT SPECIFICATION

(11) **EP 2 632 622 B1**
(45) Date of publication and mention of the grant of the patent: **25.05.2016**
(21) Application number: 11779054.3
(22) Date of filing: 24.10.2011
(51) Int. Cl.: B23K 9/095, B23K 9/10, B23K 9/12

(54) **MODULAR DATA OVER POWER CONVERTER FOR WELDING POWER SUPPLY**
MODULARTIGER KONVERTER FÜR DIE DURCH DEN SCHWEISSSTROM ÜBERTRAGENEN DATEIEN FÜR EINE SCHWEISSTROMQUELLE
CONVERTISSEUR MODULAIRE DE DONNÉES TRANSMISSE PAR LE COURANT DE SOUDAGE POUR UNE SOURCE DE PUISSANCE

(30) Priority: 26.10.2010 US 912452
(43) Date of publication of application: 04.09.2013
(73) Proprietor: Illinois Tool Works Inc., Glenview, IL 60025 (US)
(72) Inventor: OTT, Brian Lee, Glenview Illinois 60026 (US)
(74) Representative: Trinks, Ole
(86) International application number: PCT/US2011/057512
(87) International publication number: WO 2012/058164

(56) References cited:
- US-A- 4 973 821
- US-A1- 2007 080 154

## Description

The present invention relates generally to the field of welding systems adapted for remote control of welding parameters, and comprising a welding power source a wire feeder and a controller coupled between the power source and the wire feeder, such as known from US-A-4 973 821.

A wide range of systems have been developed and are presently in use for performing welding operations. In general, such devices may be based upon specific technologies and system designs, including metal inert gas (MIG), tungsten inert gas (TIG), stick, and so forth. All of these techniques require a power supply for operation. In such arc welding processes, a power circuit is developed between an electrode and a workpiece, and a resulting arc serves to heat filler metal, base metal or both.

In many welding applications a number of parameters may be modified by user selection on a faceplate or panel on a welding power supply. Such parameters may include selection of a process, selection of currents and voltages, selection of wire feed speeds, and so forth. In some processes the power supply is coupled directly to leads that are used for the welding operation. However, in many applications, such as MIG welding, leads are coupled between the power supply and a wirefeeder which spools electrode wire that serves as a filler metal during the welding operation. Many power supplies and wirefeeders are equipped to exchange data, which is typically done by a control cable separate from the weld cable that is connected between data pins on the power supply and corresponding pins on the wirefeeder. Low level power and data signals may be transmitted over the control cable such that feedback may be provided from the wirefeeder, commands can be exchanged between the devices, and in some cases weld parameters may be set remotely on the wirefeeder which may be positioned at some distance from the power supply, closer to the actual location where a welding operation is being performed.

Improvements have been made in these systems wherein data signals may be superimposed on power signals (see US-A-2007/0080154). That is, data that could be transmitted via a separate control cable may be superimposed on weld power transmitted between the welding power supply and the wirefeeder. Systems of this type allow for fewer cables extending between the power supply and the wirefeeder, and may greatly facilitate certain operations, particularly where the wirefeeder is positioned at a considerable distance from the power supply. A current problem in the field, however, results from the incompatibility of many power supplies with wirefeeders designed for use with power supplies that are capable of transmitting data and welding power over the same cable. That is, while wirefeeders and power supplies work well together when both equipped to modulate and de-modulate data over welding power, these improved wirefeeders may not function with conventional power supplies that are designed to transmit data over a separate control cable. There is a need, therefore, for an improved system that will allow for such compatibility.

### BRIEF DESCRIPTION

There present invention provides a novel welding system designed to respond to such needs. The system may be used in a wide range of settings, but is particularly well-suited to applications in which a welding power supply and a wirefeeder are used at some considerable distance from one another. The invention is well-suited to applications where a power supply is incapable of combining data with welding power, but a wirefeeder is capable of separating data from welding power signals. The invention therefore provides back compatibility for many thousands of power supplies that would not otherwise be capable of operating with such wirefeeders. The invention is particularly attractive for operations that may have a suite of wirefeeders that may now operate with both more sophisticated power supplies (capable of combining data with welding power) and more conventional welding power supplies.

In accordance with the invention, a welding system is provided according to claim 1.

### DRAWINGS

These and other features, aspects, and advantages of the present invention will become better understood when the following detailed description is read with reference to the accompanying drawings in which like characters represent like parts throughout the drawings, wherein:
FIG. 1 is a perspective view of certain functional components of an exemplary welding system in accordance with aspects of the present invention;
FIG. 2 is a perspective view of an external control module for use in a system of the type shown in FIG. 1;
FIG. 3 is a front view of the same external control module illustrating certain of its interface components; and
FIG. 4 is a diagrammatical representation of a welding power supply and an external control module designed to combine welding power with data for supply to a wirefeeder.

### DETAILED DESCRIPTION

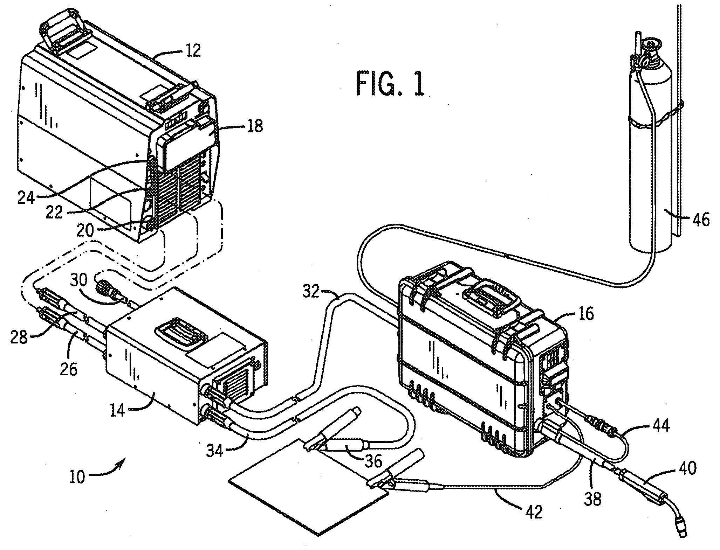

Turning now to the drawings, and referring first to FIG. 1, a welding system 10 is illustrated that includes a power supply 12, an external control module 14 and a wirefeeder 16. As will be appreciated by those skilled in the art, the system illustrated here is particularly designed for MIG welding, although in practice the power supply 12 may be used for other purposes, such as stick welding or other welding processes. Moreover, in certain designs, the power supply 12 may be designed to receive power from a power grid, or some other power source, or to generate power via an engine-driven generator. In all of these cases, in addition to providing welding power, the power supply may be equipped to provide auxiliary power such as for lights, hand tools, and so forth.

In the embodiment illustrated, the power supply 12 may be a conventional power supply that ordinarily provides welding power for a welding operation, while exchanging data with a wirefeeder via a separate control or data cable. Such cables may be configured in accordance with standards in the industry, with many such cables having connectors suitable for interfacing with multi-pin receptacles on the power supply 12 and on a conventional wirefeeder. The illustrated wirefeeder 16, however, is designed to provide data and power signals over the same cable, or in practice, to separate data from welding power provided by the power supply, and to combine data over the same conductor for sending back to a power supply. However, the power supply 12 is not designed either to combine data with welding power signals or to extract data from such welding power signals. Accordingly, the external control module 14 is provided to serve as an interface between these two system types.

In a presently contemplated embodiment, power supply 12 may be of the type available commercially from Miller Electric Mfg. Co. of Appleton, Wisconsin under the designation XMT 350 CC/CV. The wirefeeder 16, on the other hand, may be of the type commercially available from the same company under the designation Suitcase X-treme 8VS, WCC and Suitcase X-treme 12VS, WCC Other models and system types may, of course, be employed. The latter device is specifically designed in conformance with a technique sometimes referred to in the field as weld control cable (WCC) according to which a wirefeeder may allow welding operators to control certain welding parameters, such as voltage, at the wirefeeder, eliminating the need to travel to the power source for parameter adjustments. WCC-enabled devices, however, allow for connection between a WCC-enabled power supply and a WCC-enabled wirefeeder. The external control module 14, then, allows for back compatibility between WCC-enable wirefeeders and non-WCC-enabled power supplies.

In the illustrated embodiment, the power supply 12 has a front panel 18 which may permit adjustment of certain welding parameters. Depending upon the design of the power supply, such welding parameters may include selection of a welding operation, currents and voltages, and so forth. It should be noted that the provision of the external control module 14 allows for interoperability between a wide range of power supplies (i.e., sized, configurations, types) designed for different applications, where the power supplies are not WCC-enabled. Such capabilities will greatly expand the number of power supplies that can be operated with a WCC-enabled wirefeeder. Regardless of the power supply design, power supply 12 is equipped with a weld cable connection 20 and a workpiece cable connection 22. In certain operations, weld cables and workpiece cables may be coupled directly to these connections for performing a welding operation in the vicinity of the power supply. A control signal connection 24 is provided which, again, may consist of a multi-pin connector for providing data, receiving data, and providing low-level power where desired. The control signal connection 24, in conventional systems, may be used to communicate with a non-WCC-enabled wirefeeder in a conventional manner. However, in the present invention, the control signal connection 24 will be coupled to the external control module 14 and described below.

The power supply weld cable connection 20 is designed to receive a weld cable 26 and a workpiece cable 28 that extend between this power supply and the external control module 14. A control cable 30 is then coupled between the external control module 14 and the control signal connection 24 of the power supply. Thus, the external control module 14 receives weld power and may exchange data with the power supply 12 as would a conventional wirefeeder connected to the power supply. The weld cable 26, workpiece cable 28 and control cable 30 may be considered the inputs to the external control module 14. Outputs of the module are provided by a wirefeeder cable 32 that extends between the external control module and the wirefeeder, and a workpiece cable 34. In many applications, the workpiece cable 34 will terminate in a clamp 36 designed to be clamped to a workpiece. The wirefeeder 16 receives weld power and data via the cable 32 and provides weld power output via a weld cable 38 which will typically terminate in a welding torch 40. In the illustrated embodiment, the system further comprises a sensing cable 42 which may be coupled to the workpiece, and a torch trigger receptacle 44. For MIG welding, the wirefeeder may also be coupled to a gas cylinder 46 to provide desired shielding gas. As will be appreciated by those skilled in the art, depending upon the type of wire supplied in the wirefeeder 16, such welding gas may not be required.

With the arrangement shown in FIG. 1, an operator may position the power supply 12 at any convenient location, and connect the external control module 14 to the power supply as shown. The wirefeeder 16 may be similarly connected to the external control module as shown and, where desired, to a supply of shielding gas. Thereafter, the wirefeeder, which may be fully portable, may be moved to a location adjacent to a workpiece, with only the wirefeeder cable 32 and the workpiece cable 34 trailing between the external control module 14 and the wirefeeder 16. In certain cases, the workpiece cable 34 may be positioned and coupled electrically to some component of the workpiece that is relatively distant from the wirefeeder. The wirefeeder 16 is then associated with the external control module 14 such that data can be exchanged between these components over the wirefeeder cable 32.

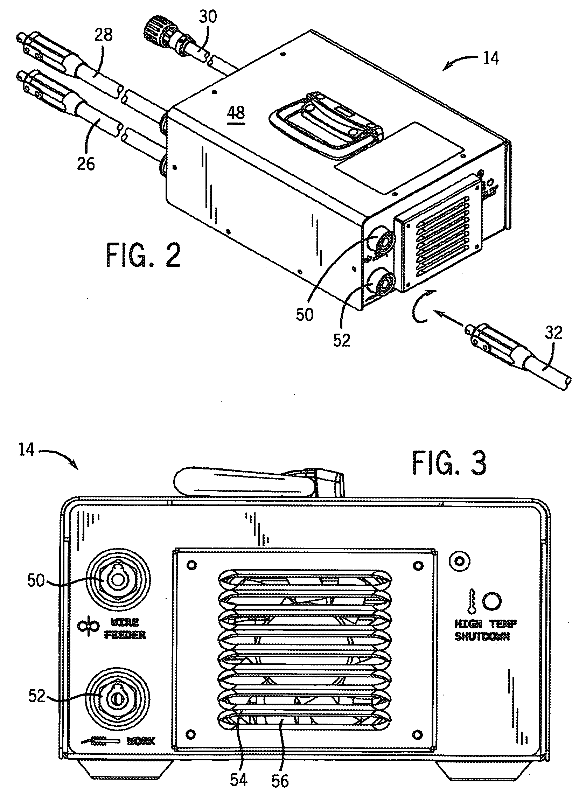

FIG. 2 is a detailed illustration of the external control module 14. As noted above, the module is equipped for interfacing with a weld cable and a workpiece cable 28 that will extend to the power supply. A control cable 30 extends to the control signal connection of the power supply. In practice, these may be conventional cables such as those used normally to connect a power supply with a non-WCC-enable wirefeeder. The external configuration of the module, in the illustrated embodiment, is an enclosure or housing 48 designed to be easily transported between locations and used in a modular fashion with power supplies and wirefeeders. Receptacles 50 and 52 are provided for receiving the wirefeeder cable and workpiece cable, respectively.

FIG. 3 is a more detailed illustration of the front panel of the module enclosure. Here again, receptacles 50 and 52 are provided for the wirefeeder cable and the workpiece cable. Other features of the module may include, for example, vent louvers 54 through which a cooling fan 56 may circulate air for cooling of the circuit components described below.

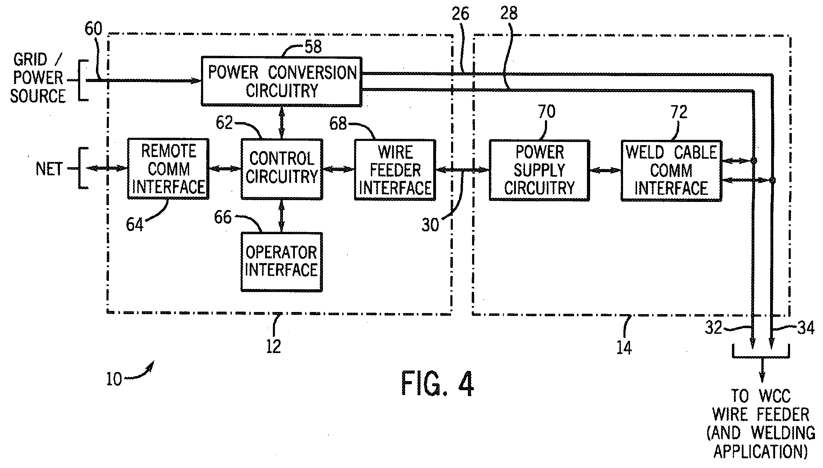

FIG. 4 is a diagrammatical representation of certain functional components that may be included in the system described above. The power supply 12 will typically include power conversion circuitry 58 which converts power from a source, as indicated by reference numeral 60 to power suitable for welding. It should be noted that the power conversion circuitry may be equipped for outputting DC power, AC power, pulsed welding power, and so forth, and may provide such power in several different possible welding modes, including constant voltage modes and constant current modes. The power conversion circuitry 58 is coupled to control circuitry 62 which regulates the operation of the power conversion circuitry 58, such as to implement different welding modes. The control circuitry 62, in turn, may be coupled to a remote communication interface 64 which may provide connectivity to other devices on a network, such as other welding power supplies, remote control and/or monitoring stations, and so forth. The control circuitry is further coupled to an operator interface 66 which allows for input of welding parameters, such as welding regimes, currents, voltages, and so forth. The operator interface will typically be accessible from a front panel of the power supply as described above. Finally, a remote receptacle 68 is coupled to the control circuitry and provides data to the wirefeeder via the external control module 14, and receives feedback and/or command signals from the wirefeeder via the external control module. In many applications, the remote receptacle 68 will be coupled to a multi-pin connector of the type described above such that a control cable 30 can be coupled between a non-WCC-enabled wirefeeder or to an external control module 14 as described herein.

The external control module 14 comprises a power supply circuitry 70 and a weld cable communication interface 72. The power supply circuitry 70 is coupled to the remote receptacle 68 via the multi-conductor control cable. The power supply circuitry provides signals to the weld cable communication interface 72 which itself serves to combine data signals onto the welding conductors as indicated by reference numerals 26 and 28 which are output via cables 32 and 34. The weld cable communication interface 72 also serves to extract data from the welding power on these conductors for providing command and/or feedback to the remote receptacle 68 and therethrough to the control circuitry 62. As noted above, the weld cable communication interface 72 may use a range of communication and signal modulating protocols, such as Echelon LonWorks™ Powerline Communications (PL-22), a narrow-band BPSK modulated carrier. Moreover, the operation of the external control module and wirefeeder may conform to the functionality set forth in the following U.S. patent applications, all of which are incorporated into the present disclosure by reference: U.S. patent application serial no. 11/625,357, entitled Method and System for a Remote Wire Feeder where Standby Power and System Control are Provided via Weld Cables, filed on January 22, 2007 by Ott; U.S. patent application serial no. 11/276,288, entitled Remote Wire Feeder using Binary Shift Keying to Modulate Communications of Command/Control Signals to be Transmitted over a Weld Cable, filed on February 22, 2006 by Ott; U.S. patent application serial no. 11/609,871, entitled Remote Wire Feeder using Binary Shift Keying to Modulate Communications of Command/Control Signals to be Transmitted over a Weld Cable, filed on December 12, 2006 by Ott et al.

As further illustrated in FIG. 4, the external control module 14 is coupled to a downstream WCC-enabled wirefeeder in operation. Signals from the power supply may thus be provided to the wirefeeder and signals from the wirefeeder may be fed back to the power supply via the external control module. It is contemplated that such WCC-enabled wirefeeders may allow for adjustment of certain of the welding parameters, such as currents and voltages from a remote location without the need to revisit the power supply interface 66. Feedback signals may also be provided in this manner, however, that are used by the power supply for adjustment of the output power for welding.

## Claims

1. A welding system (10) comprising:
a welding power supply (12) configured to provide welding power suitable for a welding operation;
a wirefeeder (16) configured to receive the welding power and to provide the power along with welding wire for the welding operation;
a controller (14) coupled between the welding power supply (12) and the wirefeeder (16), wherein the controller (14) comprises a housing (48), and a control signal connection disposed on the housing and configured to exchange welding operation data with the welding power supply (12) via a signal cable (30) connecting the welding power supply (12) and the controller (14),
**characterized by** the controller (14) comprising a welding power connection disposed on the housing (48) and configured to receive welding power from the welding power supply (12) via a weld cable (26) connecting the welding power supply (12) and the controller (14), and
a wirefeeder connection disposed on the housing (48) and configured both to send welding power from the welding power supply (12) to a wirefeeder (16) and to exchange welding operation control data with the wirefeeder (16) over a wirefeeder cable (32) connecting the wirefeeder (16) and the controller (14), and a communication circuit disposed within the housing (48) and configured to combine the welding power from the welding power supply (12) and data from the power supply (12) for application to the wirefeeder connection, and to separate data from the wirefeeder connection for communication to the control signal connection (24).

2. The system of claim 1, wherein the wirefeeder (16) is configured to permit user inputs for control of the welding operation, and wherein data representative of the inputs is conveyed via the wirefeeder cable (32) to the controller (14), and is conveyed via the weld cable (26) to the welding power supply(12).

3. The system of claim 2, wherein parameters for control of the welding operation may be input via an interface (66) on the welding power supply (12) or via the wirefeeder (16).

4. The system of claim 1, wherein the controller (14) comprises a work lead input connection and a work lead output connection, wherein the work lead input connection is configured to be coupled to a work lead connection of the welding power supply (12), and the work lead output connection is configured to be coupled to a workpiece.

5. The system of claim 4, wherein the communication circuit is configured to apply data to the wirefeeder connection and to the work lead output connection.

6. The system of claim 1, wherein the control signal connection (24) comprises a multi-pin connection.

7. The system of claim 1, wherein the controller (14) comprises a power supply coupled to the control signal connection, and wherein the communication circuit is coupled to the power supply.

8. The system of claim 1, wherein the housing (48) separate from the welding power supply and from the wirefeeder.

## Patentansprüche

1. Schweißsystem (10), das Folgendes umfasst:
eine Schweißleistungsversorgung (12), die konfiguriert ist, eine Schweißleistung bereitzustellen, die für einen Schweißvorgang geeignet ist;
einen Drahtgeber (16), der konfiguriert ist, die Schweißleistung zu empfangen und die Leistung zusammen mit Schweißdraht für den Schweißvorgang bereitzustellen;
eine Steuereinheit (14), die zwischen die Schweißleistungsversorgung (12) und den Drahtgeber (16) gekoppelt ist, wobei die Steuereinheit (14) ein Gehäuse (48) umfasst und eine Steuersignalverbindung an dem Gehäuse angeordnet ist und konfiguriert ist, Schweißvorgangsdaten mit der Schweißleistungsversorgung (12) über ein Signalkabel (30) auszutauschen, das die Schweißleistungsversorgung (12) und die Steuereinheit (14) verbindet,
**dadurch gekennzeichnet, dass** die Steuereinheit (14) eine Schweißleistungsverbindung umfasst, die an dem Gehäuse (48) angeordnet ist und konfiguriert ist, eine Schweißleistung von der Schweißleistungsversorgung (12) über ein Schweißkabel (26) zu empfangen, das die Schweißleistungsversorgung (12) und die Steuereinheit (14) verbindet, und
eine Drahtgeberverbindung, die auf dem Gehäuse (48) angeordnet ist und konfiguriert ist, sowohl Schweißleistung von der Schweißleistungsversorgung (12) an einen Drahtgeber (16) zu senden als auch Schweißvorgangssteuerdaten mit dem Drahtgeber (16) über ein Drahtgeberkabel (32) auszutauschen, das den Drahtgeber (16) und die Steuereinheit (14) verbindet, und eine Kommunikationsschaltung, die innerhalb des Gehäuses (48) angeordnet ist und konfiguriert ist, die Schweißleistung von der Schweißleistungsversorgung (12) und Daten von der Leistungsversorgung (12) für eine Anwendung bei der Drahtgeberverbindung zu vereinigen und Daten von der Drahtgeberverbindung für eine Kommunikation an die Steuersignalverbindung (24) zu trennen.

2. System nach Anspruch 1, wobei der Drahtgeber (16) konfiguriert ist, Anwendereingaben für die Steuerung des Schweißvorgangs zu erlauben, und wobei Daten, die die Eingaben repräsentieren, über das Drahtgeberkabel (32) an die Steuereinheit (14) befördert werden und über das Schweißkabel (26) an die Schweißleistungsversorgung (12) befördert werden.

3. System nach Anspruch 2, wobei die Parameter für die Steuerung des Schweißvorgangs über eine Schnittstelle (66) auf der Schweißleistungsversorgung (12) oder über den Drahtgeber (16) eingegeben werden können.

4. System nach Anspruch 1, wobei die Steuereinheit (14) eine Schweißstromrückleitungseingabeverbindung und eine Schweißstromrückleitungsausgabeverbindung umfasst, wobei die Schweißstromrückleitungseingabeverbindung konfiguriert ist, an eine Schweißstromrückleitungsverbindung der Schweißleistungsversorgung (12) zu koppeln, und die Schweißstromrückleitungsausgabeverbindung konfiguriert ist, an ein Arbeitsstück zu koppeln.

5. System nach Anspruch 4, wobei die Kommunikationsschaltung konfiguriert ist, Daten in die Drahtgeberverbindung und die Schweißstromrückleitungsausgabeverbindung einzugeben.

6. System nach Anspruch 1, wobei die Steuersignalverbindung (24) eine Mehrfachverbindung umfasst.

7. System nach Anspruch 1, wobei die Steuereinheit (14) eine Leistungsversorgung umfasst, die an die Steuersignalverbindung gekoppelt ist, und wobei die Kommunikationsschaltung an die Leistungsversorgung gekoppelt ist.

8. System nach Anspruch 1, wobei das Gehäuse (48) von der Schweißleistungsversorgung und von dem Drahtgeber getrennt ist.

## Revendications

1. Système (10) de soudage comportant :
une alimentation (12) de soudage configurée pour fournir une puissance de soudage convenant à une opération de soudage ;
un dévidoir (16) configuré pour recevoir la puissance de soudage et pour fournir la puissance ainsi que du fil de soudage pour l'opération de soudage ;
une commande (14) couplée entre l'alimentation (12) de soudage et le dévidoir (16), la commande (14) comportant un boîtier (48), et un branchement de signal de commande disposé sur le boîtier et configuré pour échanger des données d'opération de soudage avec l'alimentation (12) de soudage via un câble (30) de signal reliant l'alimentation (12) de soudage et la commande (14),
**caractérisé en ce que** la commande (14) comporte un branchement de puissance de soudage disposé sur le boîtier (48) et configuré pour recevoir une puissance de soudage en provenance de l'alimentation (12) de soudage via un câble (26) de soudage reliant l'alimentation (12) de soudage et la commande (14), et
un branchement de dévidoir disposé sur le boîtier (48) et configuré à la fois pour envoyer une puissance de soudage en provenance de l'alimentation (12) de soudage à un dévidoir (16) et pour échanger des données de commande d'opération de soudage avec le dévidoir (16) via un câble (32) de dévidoir reliant le dévidoir (16) et la commande (14), et un circuit de communication disposé à l'intérieur du boîtier (48) et configuré pour combiner la puissance de soudage en provenance de l'alimentation (12) de soudage et des données en provenance de l'alimentation (12) en vue d'une application au branchement de dévidoir, et pour séparer des données du branchement de dévidoir en vue d'une communication au branchement (24) de signal de commande.

2. Système selon la revendication 1, le dévidoir (16) étant configuré pour permettre des entrées d'utilisateur servant à la commande de l'opération de soudage, et des données représentatives des entrées étant acheminées via le câble (32) de dévidoir jusqu'à la commande (14), et étant acheminées via le câble (26) de soudage jusqu'à l'alimentation (12) de soudage.

3. Système selon la revendication 2, des paramètres servant à la commande de l'opération de soudage pouvant être introduits via une interface (66) sur l'alimentation (12) de soudage ou via le dévidoir (16).

4. Système selon la revendication 1, la commande (14) comportant un branchement d'entrée de conducteur de travail et un branchement de sortie de conducteur de travail, le branchement d'entrée de conducteur de travail étant configuré pour être couplé à un branchement de conducteur de travail de l'alimentation (12) de soudage, et le branchement de sortie de conducteur de travail étant configuré pour être couplé à une pièce.

5. Système selon la revendication 4, le circuit de communication étant configuré pour appliquer des données au branchement de dévidoir et au branchement de sortie de conducteur de travail.

6. Système selon la revendication 1, le branchement (24) de signal de commande comportant un branchement à broches multiples.

7. Système selon la revendication 1, la commande (14) comportant une alimentation couplée au branchement de signal de commande, et le circuit de communication étant couplé à l'alimentation.

8. Système selon la revendication 1, le boîtier (48) étant séparé de l'alimentation de soudage et du dévidoir.
